# EUROPÄISCHE PATENTANMELDUNG

(11) **EP 1 300 624 A2**
(43) Veröffentlichungstag der Anmeldung: **09.04.2003**
(21) Anmeldenummer: 02022036.4
(22) Anmeldetag: 01.10.2002
(51) Int. Cl.: F16L 47/00

(54) **Rohrelement aus einem thermoplastischen Kunststoff sowie Verfahren zum Verschweissen von Rohrelementen aus thermoplastischen Kunststoffen**

(30) Priorität: 05.10.2001 DE 10149301
(71) Anmelder: Weber, Joachim, Dr., 81543 München (DE); Förster, Dirk, 81543 München (DE)
(72) Erfinder: Weber, Joachim, Dr., 81543 München (DE); Förster, Dirk, 04425 Taucha (DE)
(74) Vertreter: Weber, Joachim, Dr.

(57) **Zusammenfassung**

Die Erfindung bezieht sich auf ein Rohrelement aus einem thermoplastischen Kunststoff sowie ein Verfahren zum Verschweißen von Rohrelementen aus thermoplastischen Kunststoffen, wobei an einem Verbindungsbereich zumindest eine Kammer 1, 2, 3 zur Aufnahme eines bei Reaktion Wärme freisetzenden Reaktionsmittels angeordnet ist.

## Beschreibung

Die Erfindung bezieht sich auf ein Rohrelement aus einem thermoplastischen Kunststoff sowie auf ein Verfahren zum Verschweißen von Rohrelementen aus thermoplastischen Kunststoffen.

Rohrelemente der genannten Art werden insbesondere bei der Sanierung von schadhaften Kanalisationsleitungen verwendet. Dabei werden die Rohrelemente oder Rohrmodule ohne Freilegen der Kanalisationsleitungen in diese eingepresst bzw. eingezogen. Diese Verfahren werden auch als Relining-Verfahren bezeichnet. Hierdurch ist es möglich, aufwendige Erdarbeiten zu vermeiden. Es ist lediglich erforderlich, an einer Stelle einen Schacht zu graben, durch den die Rohrelemente oder Rohrmodule in den vorhandenen, gemauerten oder aus Elementen anderer Art bestehenden, schadhaften Kanal einzuführen.

In ähnlicher Weise werden auch in einen Kanal einmündende Hausanschlüsse saniert. Hierbei wird ein Schlauch oder Hütchen durch den zuvor mittels eines Roboters ausgefrästen Zugang zu dem Hausanschluss eingesetzt und entsprechend mit dem Rohrelement verbunden.

Es sind auch bereits Vorschläge zum Verkleben von Muffenverbindungen von Polyäthylen-Rohren gemacht worden, beispielsweise in der deutschen Patentschrift 10 12 013. Das dort beschriebene Klebematerial hat sich in der Praxis aus unterschiedlichsten Gründen nicht durchsetzen können.

Die übliche, beim Stand der Technik verwendete Vorgehensweise liegt darin, die einzelnen Rohrelemente mechanisch aneinander zu verrasten, wobei zusätzliche Dichtungsringe oder Ähnliches eingelegt werden können. Diese Vorgehensweise ist mit relativ hohen Kosten verbunden, da die Herstellung der einzelnen Rohrelemente, insbesondere deren Verrastungsbereiche, sehr aufwendig ist. Rohrelemente der beschriebenen Art werden üblicherweise extrudiert oder nach sonstigen Rohrherstellungsverfahren gefertigt. Somit müssen die Verbindungselemente in separaten Arbeitsgängen hergestellt werden.

Zum Anschluss von Hauselementen ist es bekannt, eine Verschweißung durch Heizleiterwendel zu realsieren. Die Heizleiterwendeln sind üblicherweise in die Verbindungsbereiche eingeklebt oder dort vormontiert. Zum Einsetzen der Rohrelemente ist es erforderlich, diese auf Rohrroboter aufzusetzen, an die gewünschte Stelle zu verfahren und anschließend solange zu beheizen, bis der Schweißvorgang beendet ist. Als besonders nachteilig erweist es sich, dass hohe elektrische Leistungen über einen längeren Zeitraum erforderlich sind, wo insbesondere der elektrische Anschluss und die Kontaktierung der Heizleiterwendel technisch aufwendig und anspruchsvoll ist. Diese Vorgehensweise ist beispielsweise in der EP 674 131 B1 beschrieben.

Der Erfindung liegt die Aufgabe zu Grunde, ein Rohrelement sowie ein Verfahren der eingangs genannten Art zu schaffen, welche bei einfacher, kostengünstiger Umsetzbarkeit die Verweißung von thermoplastischen Kunststoffrohren ermöglichen.

Erfindungsgemäß wird die Aufgabe durch die Merkmale des Hauptanspruchs bzw. des nebengeordneten Anspruchs gelöst, die jeweiligen Unteransprüche zeigen weitere vorteilhafte Ausgestaltungen der Erfindung.

Erfindungsgemäß ist somit vorgesehen, dass an einem Verbindungsbereich des Rohrelements zumindest eine Kammer zur Aufnahme eines bei Reaktion Wärme freisetzenden Reaktionsmittels ausgebildet ist.

Das erfindungsgemäße Rohrelement zeichnet sich durch eine Reihe erheblicher Vorteile aus. Durch die Verwendung eines exotherm reagierenden Reaktionsmittels ist es möglich, die zum Verschweißen erforderliche Energie ohne externe Energieversorgung bereitzustellen. Durch entsprechende Dimensionierung der Kammer sowie der Menge des zumindest einen Reaktionsmittel kann eine an den Schweißvorgang angepasste Wärmemenge freigesetzt werden. Die Anpassung kann beispielsweise hinsichtlich der Materialstärken erfolgen.

Bevorzugter Weise ist die Kammer ringförmig ausgebildet, sodass der gesamte Querschnittsbereich des Rohrs zum Verschweißen aufgeschmolzen werden kann. Es versteht sich, dass bei Ovalrohren eine entsprechend ovale Kammer vorgesehen ist.

Die Kammer erstreckt sich bevorzugter Weise um den gesamten Umfang des Verbindungsbereichs, sodass dieser gleichmäßig verschweißt wird.

Um einen guten Wärmeübergang von der Kammer zu dem Fügeoder Verbindungsbereich zu gewährleisten, ist es besonders günstig, wenn im Bereich der Kammer zumindest ein Wärmeleitelement vorgesehen ist. Dieses kann lösbar an dem Rohrelement angeordnet sein. Das Wärmeelement kann sich bis in den Fügebereich des Verbindungsbereichs erstrecken. Es ist beispielsweise in Form eines aus einem gut wärmeleitenden Metall geformten Streifens ausgebildet. Als Metall kann beispielsweise Kupfer verwendet werden.

Besonders günstig ist es, wenn die Kammer an der Innenseite des Rohrelements ausgebildet ist. Die Kammer kann in günstiger Weiterbildung lösbar an dem Rohrelement befestigt sein, sodass die Kammer nach dem Verschweißen entnommen werden kann. Hierdurch wird der freie Kanalquerschnitt nicht beeinträchtigt.

Um das zumindest eine Reaktionsmittel zur chemischen Reaktion anzuregen, ist es günstig, wenn die Kammer mit einer durch Druck verformbaren Wandung versehen ist. Bei mehreren Kammern kann es günstig sein, wenn zumindest eine Trennwand der Kammern aufbrechbar ist, beispielsweise mittels eines Aufbrechelements. Durch entsprechende Verformung der Kammern wird somit die Trennwand geöffnet, sodass die beiden unterschiedlichen Reaktionsmittel miteinander reagieren können.

Bevorzugt ist es, wenn erfindungsgemäß zwei exotherm reagierende Komponenten vorgesehen sind. Diese können beispielsweise Ätzkalk und Wasser sein. Es ist beispielsweise auch möglich, Kaliumpermanganat, hochdisperses Siliciumdioxid, Glycerin und Wasser als Reaktionsmittel vorzusehen. Hierbei dient das Kaliumpermanganat als Oxidationsmittel, während das Glycerin als Reaktionsmittel dient. Das Siliciumdioxid ist als Passivmittel beigefügt.

Durch entsprechende Auswahl der Reaktionsmittel ist es möglich, den Reaktionsverlauf, d.h. den zur Verfügung stehenden Zeitraum entsprechend zu bestimmen.

Erfindungsgemäß ist es jedoch auch möglich, andere Heizmassen vorzusehen, die beispielsweise über eine Zündmasse oder einen separaten Zünder gezündet werden können.

In jedem Fall ist es vorteilhaft, wenn die Reaktionsmittel so ausgewählt sind, dass keine Explosionsgefahr besteht. Weiterhin empfiehlt es sich, die Reaktionsmittel so zu wählen, dass ein umweltverträgliches Endprodukt gebildet wird.

Im Rahmen der Erfindung können auch Reaktionsmittel verwendet werden, die unter Druckaufbringung exotherm miteinander reagieren. Die Druckaufbringung kann durch eine geeignete Vorrichtung erfolgen, die an einem Rohrroboter getragen ist.

Um die Reaktionswärme nur an den Fügebereich zu leiten, kann es günstig sein, wenn zumindest eine der Wandungen der Kammer mit einem wärmeisolierenden Material beschichtet ist bzw. aus einem wärmeisolierenden Material besteht.

Hinsichtlich des Verfahrens ist erfindungsgemäß vorgesehen, dass zumindest ein Rohrelement an einen Verbindungsbereich gebracht wird, dass eine Kammer mit zumindest einem bei Reaktion Wärme freisetzenden Reaktionsmittel an dem Verbindungsbereich angeordnet ist und dass nachfolgend das Reaktionsmittel zur Reaktion gebracht.

Nach erfolgter Reaktion wird die Kammer von dem Rohrelement gelöst.

Die Erfindung wird durch folgende Klauseln beschrieben, welche die Merkmale der Erfindung wiedergeben.
1. Rohrelement aus einem thermoplastischen Kunstoff, dadurch gekennzeichnet, dass bei einem Verbindungsbereich zumindest eine Kammer (1, 2, 3) zur Aufnahme eines bei Reaktion Wärme freisetzenden Reaktionsmittels ausgebildet ist.
2. Rohrelement nach Klausel 1, dadurch gekennzeichnet, dass die Kammer (1, 2, 3) ringförmig ausgebildet ist.
3. Rohrelement nach Klausel 1 oder 2, dadurch gekennzeichnet, dass die Kammer (1, 2, 3) sich um den gesamten Umfang des Verbindungsbereichs erstreckt.
4. Rohrelement nach einer der Klauseln 1 bis 3, dadurch gekennzeichnet, dass nebeneinander mehrere Kammern (1, 2, 3) zur Aufnahme verschiedener Reaktionsmittel vorgesehen sind.
5. Rohrelement nach einer der Klauseln 1 bis 4, dadurch gekennzeichnet, dass im Bereich der Kammer (1, 2, 3) zumindest ein Wärmeleitelement (4) vorgesehen ist.
6. Rohrelement nach Klausel 5, dadurch gekennzeichnet, dass das Wärmeleitelement (4) lösbar an dem Rohrelement angeordnet ist.
7. Rohrelement nach einer der Klauseln 5 bis 6, dadurch gekennzeichnet, dass sich das Wärmeleitelement (4) bis in den Fügebereich des Verbindungsbereichs erstreckt.
8. Rohrelement nach einer der Klauseln 5 bis 7, dadurch gekennzeichnet, dass das Wärmeleitelement (4) in Form eines Streifens aus einem gut wärmeleitenden Metall ausgebildet ist.
9. Rohrelement nach einer der Klauseln 1 bis 6, dadurch gekennzeichnet, dass die Kammer (1, 2, 3) an der Innenseite des Rohrelements ausgebildet ist.
10. Rohrelement nach einer der Klauseln 1 bis 7, dadurch gekennzeichnet, dass die Kammer (1, 2, 3) von dem Rohrelement lösbar ausgebildet ist.
11. Rohrelement nach einer der Klauseln 1 bis 8, dadurch gekennzeichnet, dass die Kammer (1, 2, 3) mit einer durch Druck verformbaren Wandung versehen ist.
12. Rohrelement nach einer der Klauseln 1 bis 9, dadurch gekennzeichnet, dass bei mehreren Kammern (1, 2, 3) zumindest eine Trennwand (5) der Kammern (1, 2, 3) aufbrechbar ausgebildet ist.
13. Rohrelement nach Klausel 12, dadurch gekennzeichnet, dass die Trennwand (5) mittels zumindest eines in zumindest einer Kammer (1, 2, 3) angeordneten Aufbrechelements (6) aufbrechbar ist.
14. Rohrelement nach einer der Klauseln 1 bis 13, dadurch gekennzeichnet, dass die Kammer (1, 2, 3) mit zumindest einer wärmeisolierenden Wandung umgeben ist.
15. Rohrelement nach einer der Klauseln 1 bis 14, dadurch gekennzeichnet, dass das Reaktionsmittel zwei exotherm reagierende Komponenten umfasst.
16. Rohrelement nach Klausel 15, dadurch gekennzeichnet, dass die Komponenten bei gegenseitigem Kontakt miteinander exotherm reagieren.
17. Rohrelement nach Klausel 15 oder 16, dadurch gekennzeichnet, dass die beiden Komponenten unter Druckaufbringung exotherm miteinander reagieren.
18. Rohrelement nach einer der Klauseln 1 bis 17, dadurch gekennzeichnet, dass das Rohrelement aus einem PE-Material gefertigt ist.
19. Verfahren zum Verschweißen von Rohrelementen aus einem thermoplastischen Kunststoff, dadurch gekennzeichnet, dass in dem Fügebereich eine Kammer mit zumindest einem bei Reaktion Wärme freisetzenden Reaktionsmittel angeordnet ist.
20. Verfahren nach Klausel 19, dadurch gekennzeichnet, dass zur Einleitung der Reaktion die Kammer mechanisch verformt wird.
21. Verfahren nach Klausel 19 oder 20, dadurch gekennzeichnet, dass nach erfolgter Verschweißung die Kammer aus dem Rohrelement entfernt wird.

Im Folgenden wird die Erfindung anhand von Ausführungsbeispielen in Verbindung mit der Zeichnung beschrieben. Dabei zeigt:
- Fig. 1: eine vereinfachte, perspektivische Darstellung eines Schlauchs zum Auskleiden von Hausanschlüssen,
- Fig. 2: eine vereinfachte Schnittdarstellung des in Fig. 1 gezeigten Schlauchs im eingebauten Zustand,
- Fig. 3: eine schematische Seiten-Schnittansicht eines Ausführungsbeispiels der erfindungsgemäßen Kammer,
- Fig. 4+5: vereinfachte Schnittansichten weiterer Ausgestaltungsformen erfindungsgemäßer Kammern, und
- Fig. 6: eine vereinfachte Schnittansicht eines Verbindungsbereichs zur Verbindung zweier Rohrelemente unter Verwendung der erfindungsgemäßen Kammer.

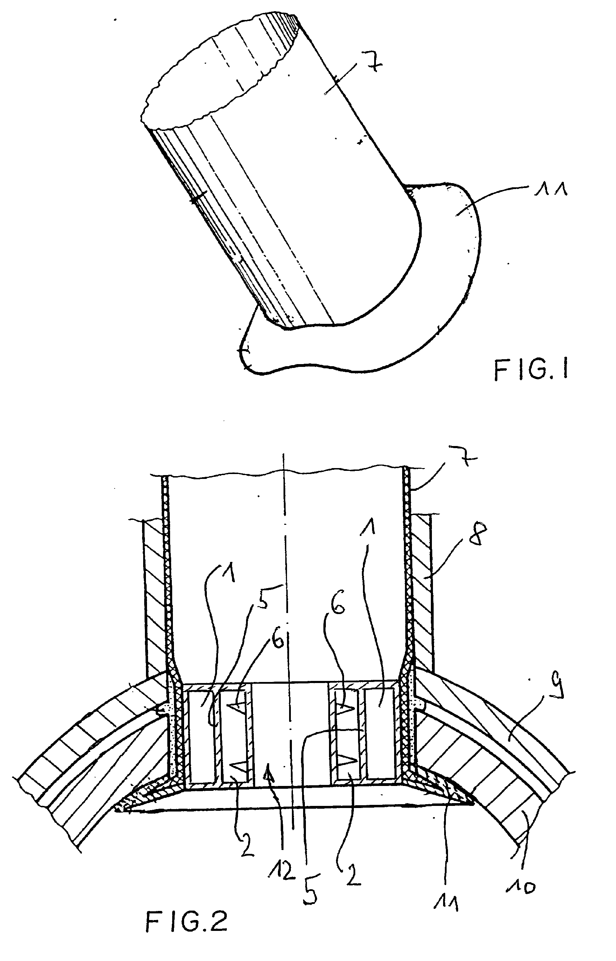

Die Fig. 1 zeigt in vereinfachter Darstellung einen Schlauch 7, der zur Auskleidung eines Hausanschlusses 8 dient. Der Hausanschluss 8 zweigt, wie in Fig. 2 gezeigt, von einem zu sanierenden Kanal 9 ab, in den in einem Relining-Verfahren bereits ein Rohr 10 aus einem thermopastischen Kunststoff, beispielsweise Polyäthylen (PE), eingezogen ist. Der Hausanschluss wurde mittels eines Fräsers bereits aus dem Rohr 10 ausgefräst. Der Schlauch 10 kann aus unterschiedlichsten Materialien, beispielsweise einem mit Kunstharz getränkten Trägermaterial, wie etwa einem Glasfasergewebe, bestehen. Der Schlauch 7 verklebt sich somit mit dem Rohr des Hausanschlusses 8.

Am Endbereich ist an dem Schlauch 7 eine Manschette 11 aus einem thermoplastischen Material, beispielsweise PE, befestigt. Diese Befestigung kann durch Vernähen oder in ähnlicher Weise erfolgen.

Die Anordnung der Manschette 11 in dem Rohr 10 ergibt sich aus der Darstellung der Fig. 2.

In den freien Endbereich des Schlauchs 7 ist ein Kammerelement 12 eingesetzt, welches eine ringförmige erste Kammer 1 sowie eine ringförmige zweite Kammer 2 umfasst. Die Kammern 1, 2 werden durch eine Trennwand 5 voneinander getrennt. In der zweiten Kammer 2 sind mehrere konusartige Aufbrechelemente 6 angeordnet. Die Wandungen des Kammerelements 12 sind, insbesondere in radialer Richtung verformbar, sodass durch ein Spreizen des Kammerelementes 12 die Aufbrechelemente 6 die Trennwand 5 durchstoßen. Hierdurch können die unterschiedlichen Reaktionsmittel reagieren. Sie setzen Wärme frei, sodass ein Verschweißen des Endbereichs des Schlauchs 7 bzw. der Manschette 11 mit dem Rohr 10 erfolgt. Nach Beendigung der Reaktion kann das Kammerelement 12 aus dem Hausabschluss-Rohr 8 abgezogen und entfernt werden.

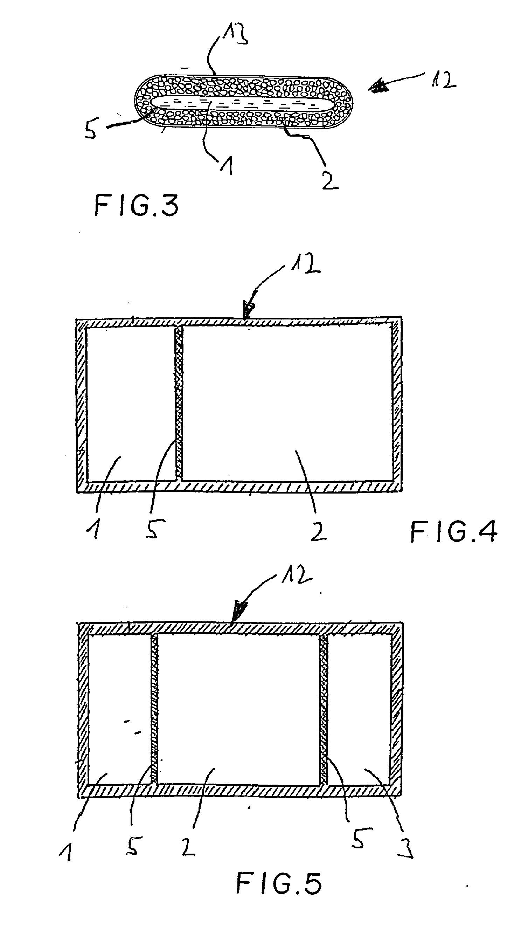

Die Fig. 3 bis 5 zeigen Varianten von möglichen Kammerelementen 12. Bei dem in Fig. 3 gezeigten Ausführungsbeispiel ergibt sich eine schlauchartige oder beutelartige Form, die ein hohes Maß an Flexibilität aufweisen kann. Das Aufbrechen der Trennwand 5 erfolgt durch entsprechende Verformung oder Druckaufbringung auf das Kammerelement 12, dessen äußere Wandung 13 aus einem festeren Material gefertigt ist, als die Trennwand 5.

Bei den Ausführungsbeispielen der Fig. 4 und 5 ist das Kammerelement 12 jeweils mit einem im Wesentlichen rechteckigen Querschnitt versehen. Das Ausführungsbeispiel der Fig. 4 zeigt zwei Kammern 1, 2, während bei dem Ausführungsbeispiel der Fig. 5 eine dritte Kammer 3 vorgesehen ist.

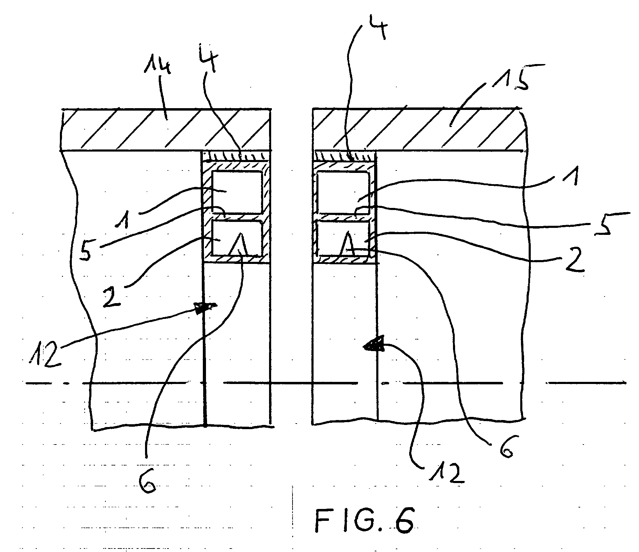

Die Fig. 6 zeigt in schematischer Weise zwei stirnseitige Enden zweier Rohrelemente, an welchen jeweils ein ringförmiges Kammerelement 12 eingesetzt ist. Dieses umfasst eine erste Kammer 1 sowie eine zweite Kammer 2. Die Ausgestaltungen entsprechen analog der Ausgestaltung der Fig. 2.

Bei dem Ausführungsbeispiel der Fig. 6 ist zusätzlich ein ringförmiges Wärmeleitelement 4 vorgesehen, welches beispielsweise aus Kupfer oder einem Kupfermaterial bestehen kann. Hierdurch wird die Reaktionswärme besonders gleichmäßig auf die Wandungen bzw. Endbereiche der beiden Rohre verteilt. Es versteht sich, dass zum Verschweißen die beiden Rohre 14, 15 stirnseitig gegeneinander gepresst werden, bevor der eigentliche Reaktionsvorgang gestattet wird. Nachfolgend ist es möglich, die beiden Rohre 14, 15 im erwärmten, aufgeschmolzenen Zustand nochmals gegeneinander zu drücken, um eine besonders innige Verschweißung zu gewährleisten. Durch die lösbare Anordnung des Kammerelements 12 kann dieses hierbei verrutschen und behindert nicht den Fügevorgang.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

## Patentansprüche

1. Rohrelement aus einem thermoplastischen Kunstoff, **dadurch gekennzeichnet, dass** bei einem Verbindungsbereich zumindest eine Kammer (1, 2, 3) zur Aufnahme eines bei Reaktion Wärme freisetzenden Reaktionsmittels ausgebildet ist.

2. Rohrelement nach Anspruch 1, **dadurch gekennzeichnet, dass** die Kammer (1, 2, 3) ringförmig ausgebildet ist.

3. Rohrelement nach einem der Ansprüche 1 oder 2, **dadurch gekennzeichnet, dass** nebeneinander mehrere Kammern (1, 2, 3) zur Aufnahme verschiedener Reaktionsmittel vorgesehen sind.

4. Rohrelement nach einem der Ansprüche 1 bis 3, **dadurch gekennzeichnet, dass** im Bereich der Kammer (1, 2, 3) zumindest ein Wärmeleitelement (4) vorgesehen ist.

5. Rohrelement nach einem der Ansprüche 1 bis 4, **dadurch gekennzeichnet, dass** die Kammer (1, 2, 3) mit einer durch Druck verformbaren Wandung versehen ist.

6. Rohrelement nach einem der Ansprüche 1 bis 5, **dadurch gekennzeichnet, dass** bei mehreren Kammern (1, 2, 3) zumindest eine Trennwand (5) der Kammern (1, 2, 3) aufbrechbar ausgebildet ist.

7. Rohrelement nach einem der Ansprüche 1 bis 6, **dadurch gekennzeichnet, dass** das Reaktionsmittel zwei exotherm reagierende Komponenten umfasst.

8. Verfahren zum Verschweißen von Rohrelementen aus einem thermoplastischen Kunststoff, **dadurch gekennzeichnet, dass** in dem Fügebereich eine Kammer mit zumindest einem bei Reaktion Wärme freisetzenden Reaktionsmittel angeordnet ist.

9. Verfahren nach Anspruch 8, **dadurch gekennzeichnet, dass** zur Einleitung der Reaktion die Kammer mechanisch verformt wird.

10. Verfahren nach Anspruch 8 oder 9, **dadurch gekennzeichnet, dass** nach erfolgter Verschweißung die Kammer aus dem Rohrelement entfernt wird.
